# EUROPEAN PATENT APPLICATION

(11) **EP 3 636 483 A1**
(43) Date of publication of application: **15.04.2020**
(21) Application number: 19173640.4
(22) Date of filing: 09.05.2019
(51) Int. Cl.: B60L 53/80, B60L 58/10, H02J 7/00

(54) **SWAPPABLE BATTERY HAVING FUNCTION OF LIGHT INDICATION**

(30) Priority: 22.08.2018 TW 107129264
(71) Applicant: Kwang Yang Motor Co., Ltd., Kaohsiung City 80794 (TW)
(72) Inventor: LI, Yi-Lin, 80794 Kaohsiung (TW)
(74) Representative: Regimbeau

(57) **Abstract**

A swappable battery includes an indicator (11), an energy storage (12), a detector (13) and a controller (15) . The detector (13) is to be connected to a charging base (91) of a charger (9) for receiving a power signal transmitted by the charging base (91), and is to detect, in response to receipt of the power signal, a physical parameter related to the energy storage (12) so as to generate capacity information. The controller (15) is connected to the indicator (11) and the detector (13), determines a current capacity of the energy storage (12) based on the capacity information, and controls the indicator (11) to output indication corresponding to the current capacity.

## Description

The disclosure relates to a swappable battery, and more particularly to a swappable battery having a function of light indication.

A conventional swappable battery used on an electric motorcycle lacks a means for indicating a current residual electricity condition of the conventional battery.

Therefore, an object of the disclosure is to provide a swappable battery having a function of light indication.

According to one aspect of the disclosure, the swappable battery is adapted to be used on an electric cycle, and is to be charged by a charger. The charger includes a charging base. The charging base transmits a power signal to the swappable battery when the swappable battery is connected to the charger for being charged. The swappable battery includes an indicator, an energy storage, a detector and a controller. The detector is electrically connected to the energy storage, and is to be electrically connected to the charging base of the charger for receiving the power signal transmitted by the charging base. The detector is to detect, in response to receipt of the power signal, at least one physical parameter related to the energy storage so as to generate capacity information. The controller is electrically connected to the indicator and the detector. The controller is configured to determine a current capacity of the energy storage based on the capacity information, and to control the indicator to output indication corresponding to the current capacity.

According to another aspect of the disclosure, the swappable battery is adapted to be used on an electric cycle. The electric cycle includes a battery case for accommodating the swappable battery and a case controlling unit that is electrically connected to the battery case and that transmits an open signal when the battery case is opened. The swappable battery includes an indicator, an energy storage, a communication unit, a detector and a controller. The communication unit is communicable with the case controlling unit of the electric cycle, and is configured to receive the open signal transmitted by the case controlling unit. The detector is electrically connected to the energy storage, and is configured to detect at least one physical parameter related to the energy storage so as to generate capacity information. The controller is electrically connected to the indicator, the detector and the communication unit, and is configured to determine a current capacity of the energy storage based on the capacity information, and to control the indicator to output indication corresponding to the current capacity.

According to still another aspect of the disclosure, the swappable battery is adapted to be used on an electric cycle, and is to be charged by a charging base of one of a plurality of charging cabinets of a charging station. The charging base transmits a power signal to the swappable battery when the swappable battery is connected to the charging base for being charged. The swappable battery includes an indicator, an energy storage, a communication unit, a detector and a controller. The communication unit is communicable with the charging station, and is configured to receive the power signal transmitted by the charging base. The detector is electrically connected to the energy storage, and is configured to detect at least one physical parameter related to the energy storage so as to generate capacity information. The controller is electrically connected to the indicator, the detector and the communication unit, and is configured to receive the power signal transmitted by the charging base, to control the detector to generate the capacity information, to determine a current capacity of the energy storage based on the capacity information, and to control the indicator to output indication corresponding to the current capacity for a predetermined duration and to refrain from outputting indication after the predetermined duration has elapsed.

Other features and advantages of the disclosure will become apparent in the following detailed description of the embodiments with reference to the accompanying drawings, of which:
Figure 1 is a perspective view illustrating an embodiment of a swappable battery to be charged by a charger according to the disclosure;
Figure 2 is a perspective view illustrating an embodiment of a battery case accommodating two swappable batteries according to the disclosure;
Figure 3 is a block diagram illustrating a first embodiment of the swappable battery according to the disclosure;
Figure 4 is a block diagram illustrating a second embodiment of the swappable battery according to the disclosure;
Figure 5 is a block diagram illustrating a third embodiment of the swappable battery according to the disclosure;
Figure 6 is a block diagram illustrating a fourth embodiment of the swappable battery according to the disclosure; and
Figure 7 is a front schematic view illustrating an embodiment of a charging station according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

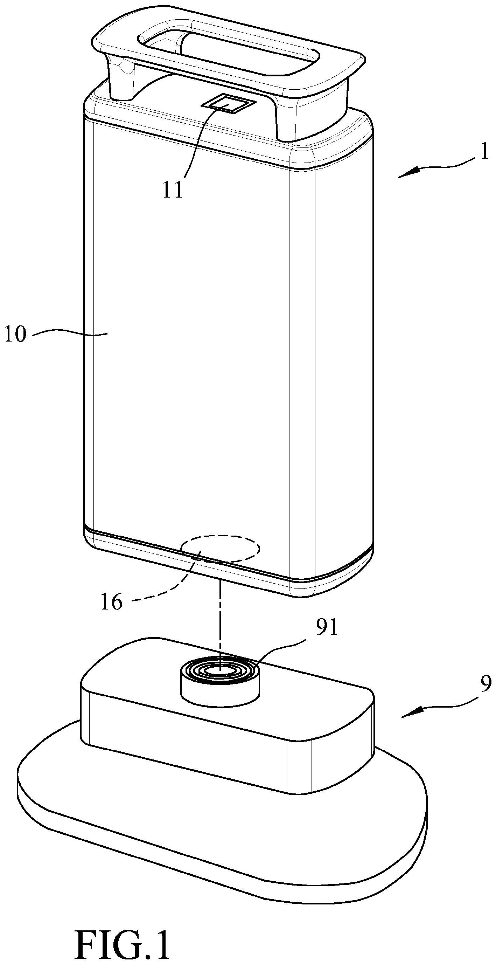

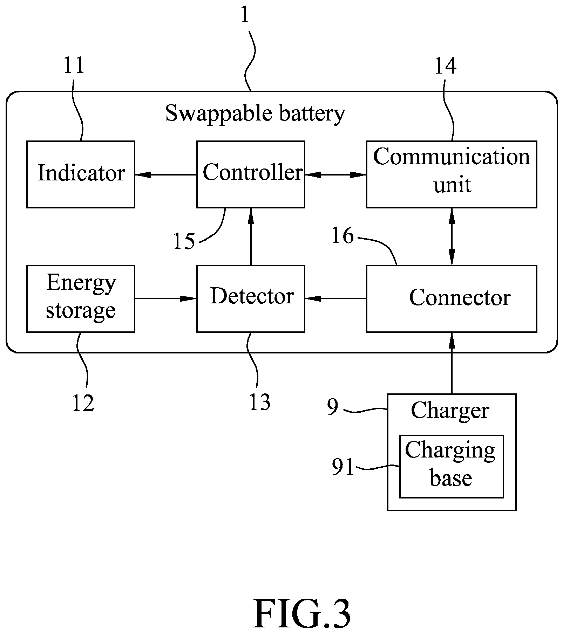

Referring to Figures 1 to 3, a first embodiment of a swappable battery 1 having a function of light indication according to the disclosure is illustrated. The swappable battery 1 is adapted to be used on an electric cycle 8, and is to be charged by a charger 9. In this embodiment, the electric cycle 8 is implemented to be an electric motorcycle and the charger 9 is a battery charger that can be used at home to charge the swappable battery 1, but implementations of the electric cycle 8 and the charger 9 are not limited to the disclosure herein and may vary in other embodiments.

The charger 9 includes a charging base 91. The charging base 91 transmits a power signal to the swappable battery 1 when the swappable battery 1 is connected to the charger 9 for being charged.

The swappable battery 1 includes a housing body 10, an indicator 11 disposed on the housing body 10, an energy storage 12, a detector 13 electrically connected to the energy storage 12, a communication unit 14, a controller 15 electrically connected to the communication unit 14, and a connector 16 electrically connected to the detector 13 and the communication unit 14. It should be noted that in this embodiment, since the charging base 91 of the charger 9 does not have a function of data communication, the communication unit 14 does not communicate with the charging base 91 of the charger 9 for transmission/reception of data.

The detector 13 is to be electrically connected to the charging base 91 of the charger 9 via the connector 16 for receiving the power signal transmitted by the charging base 91. The detector 13 is to detect, in response to receipt of the power signal, at least one physical parameter related to the energy storage 12 so as to generate capacity information . In this embodiment, said at least one physical parameter is implemented to include one or more of the physical parameters of voltage, electric current and temperature of the energy storage 12, but implementation of said at least one physical parameter is not limited to the disclosure herein and may vary in other embodiments. The capacity information in this embodiment thus contains information of the voltage, electric current and/or temperature detected by the detector 13. In this embodiment, the detector 13 may be implemented to be a voltmeter, an ammeter, a thermometer, or a combination thereof. However, implementation of the detector 13 is not limited to the disclosure herein and may vary in other embodiments.

The controller 15 is further electrically connected to the indicator 11 and the detector 13. The controller 15 is configured to determine a current capacity (capacity at the present time) of the energy storage 12 based on the capacity information, and to control the indicator 11 to output indication corresponding to the current capacity.

Specifically speaking, the controller 15 is configured to control the indicator 11 to emit flashing light when it is determined that the energy storage 12 has not been charged up (i.e., is below its full charge capacity), and to control the indicator 11 to emit constant light (i.e,. to generate a continuous light output) when it is determined that the energy storage 12 has been charged up (i.e., charged to its full charge capacity). Note that the full charge capacity may be the rated maximum charge capacity of the energy storage 12, or the actual charge capacity of the energy storage 12 at the time (which is generally below the ratedmaximum charge capacity as the energy storage 12 ages or deteriorates over time).

In one embodiment, the controller 15 is configured to control the indicator 11 to emit light in different ways corresponding to respective ranges of the current capacity of the energy storage 12. For example, the indicator 11 is controlled to emit red light in a flashing way when it is determined that the current capacity of the energy storage 12 ranges from 0% to 33% of the full charge capacity, to emit orange light in a flashing way when it is determined that the current capacity of the energy storage 12 ranges from 34% to 66% of the full charge capacity, to emit green light in a flashing way when it is determined that the current capacity of the energy storage 12 ranges from 67% to 99% of the full charge capacity, and to continuously emit green light when it is determined that the current capacity of the energy storage 12 has reached the full charge capacity (100%). When the swappable battery 1 is disconnected from the charging base 91 of the charger 9, the indicator 11 of the swappable battery 1 stops emitting light.

In this embodiment, the indicator 11 is a light-emitting diode, LED, light source, but implementation of the indicator 11 is not limited to the disclosure herein and may vary in other embodiments .

In this embodiment, the controller 15 may be implemented to be a microcontroller unit (MCU), a central processing unit (CPU), a microprocessor or any circuit configurable/programmable in a software manner and/or hardware manner to implement functionalities of this disclosure.

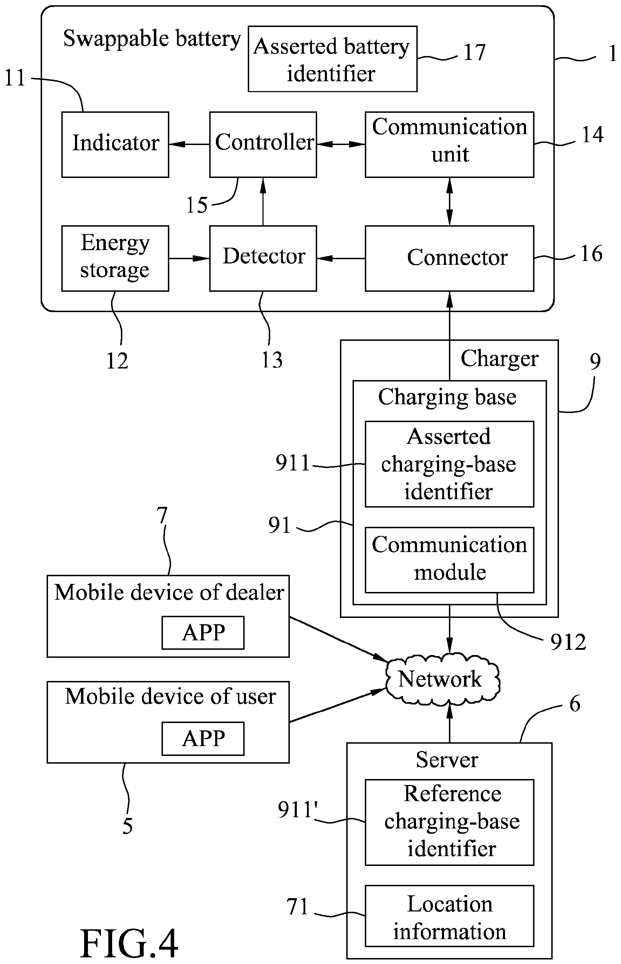

Referring to Figures 1, 2 and 4, a second embodiment of the swappable battery 1 according to the disclosure is illustrated. The second embodiment is similar to the first embodiment; for example, the second embodiment is also capable of controlling the indicator 11 to emit light in different ways corresponding to respective ranges of the current capacity of the energy storage 12. However, the second embodiment is different from the first embodiment in some aspects as described below.

The swappable battery 1 is configured to store an asserted battery identifier 17 that is associated with a mobile device 5 of a user who owns the swappable battery 1. The mobile device 5 of the user may be a smartphone, but implementation thereof is not limited to the disclosure herein and may vary in other embodiments.

The charging base 91 of the charger 9 is located near a dealer, includes a communication module 912, and stores an asserted charging-base identifier 911 of the charging base 91. The swappable battery 1 is communicable with the charging base 91 of the charger 9 via the communication unit 14.

In this embodiment, the communication unit 14 of the swappable battery 1 may be implemented to be a wired communication device (e.g., a transceiver utilizing a wire-based communication technology) or a wireless communication device (e.g., a WiFi module, a Bluetooth device, or a device having wireless communication capability), but implementation of the communication unit 14 is not limited to the disclosure herein and may vary in other embodiments.

In this embodiment, the communication module 912 of the charger 9 may be implemented to be a wired communication device (e.g., a transceiver utilizing a wire-based communication technology) or a wireless communication device (e.g., a WiFi module or a device having wireless communication capability) that is able to communicate with a server 6 via a network, but implementation of the communication module 912 is not limited to the disclosure herein and may vary in other embodiments.

The server 6 stores in advanced a reference charging-base identifier 911' , and a piece of location information 71 that corresponds to the reference charging-base identifier 911' . In this embodiment, the location information 71 represents a location of the dealer.

It should be noted that when the user takes the swappable battery 1 to the dealer for being charged, the dealer may record service-related information (e.g., an asserted user identifier, a license plate number of the electric cycle 8, the asserted battery identifier 17, residual capacity of the swappable battery 1) in a mobile device 7 of the dealer that is executing an application program (APP). The service-related information is automatically transmitted by the mobile device 7 of the dealer to the server 6 via the network. In this embodiment, the mobile device 7 of the dealer may be a smartphone, but implementation thereof is not limited to the disclosure herein and may vary in other embodiments.

When the swappable battery 1 is connected to the charging base 91 of the charger 9 for being charged, the communication unit 14 is configured to transmit the current capacity determined by the controller 15 and the asserted battery identifier 17 to the charging base 91 so as to enable the charging base 91 to transmit, via the communication module 912, the asserted charging-base identifier 911, the current capacity and the asserted battery identifier 17 to the server 6. Then, the server 6 is triggered to determine the mobile device 5 that is associated with the asserted battery identifier 17 based on the asserted battery identifier 17 thus received, and determine the piece of location information 71 corresponding to the reference charging-base identifier 911' that matches the asserted charging-base identifier 911 thus received. The server 6 continuously determines whether a distance between the charging base 91 located near the dealer and the mobile device 5 of the user who owns the swappable battery 1 is smaller than a predetermined distance based on the piece of location information 71 and a piece of positioning information representing a real-time position of the mobile device 5 and obtained from the mobile device 5 of the user. When it is determined that the distance between the charging base 91 and the mobile device 5 is smaller than the predetermined distance, which may imply that the user is coming to pick up the swappable battery 1, the server 6 transmits a pick-up notification signal to the charging base 91 of the charger 9 which relays the pick-up notification signal to the communication unit 14 of the swappable battery 1. The controller 15 of the swappable battery 1 is configured to, based on the pick-up notification signal received by the communication unit 14, control the indicator 11 to output visual indication so as to notify the dealer that the user who owns the swappable battery 1 is coming to pick up the swappable battery 1. At the same time, the user may be able to efficiently find the exact swappable battery 1 he/she is going to pick up from among the swappable batteries at the dealer through seeing the visual indication outputted by the indicator 11.

In this embodiment, the predetermined distance may range from 0 to 20 meters.

In this embodiment, the controller 15 of the swappable battery 1 controls the indicator 11 to emit flashing light to serve as a visual cue for notifying the dealer that the user who owns the swappable battery 1 is coming to pick up the swappable battery 1, and for directing the user toward his/her swappable battery 1, creating an effect of seemingly welcoming the user to pick up the swappable battery 1. However, implementation of the form of visual indication outputted by the indicator 11 is not limited to the disclosure herein and may vary in other embodiments.

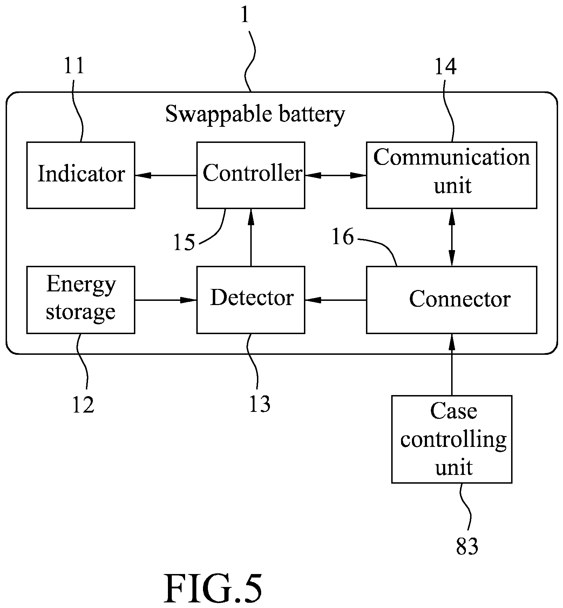

Referring to Figures 1, 2 and 5, a third embodiment of the swappable battery 1 according to the disclosure is illustrated.

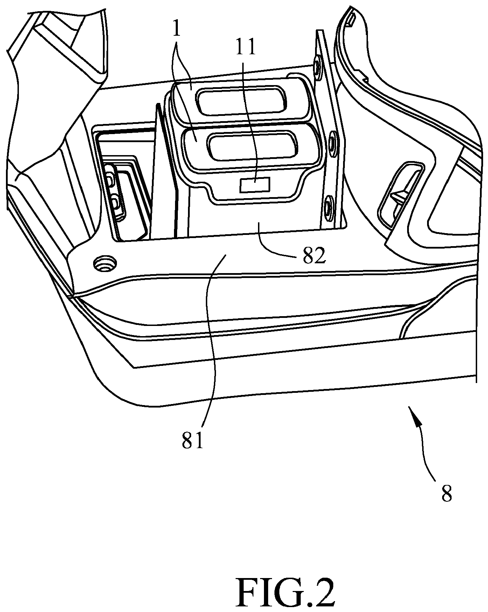

The swappable battery 1 is adapted to be used on an electric cycle 8. The electric cycle 8 includes a footplate 81, a battery case 82 for accommodating the swappable battery 1, and a case controlling unit 83. The battery case 82 is normally positioned under the footplate 81. The case controlling unit 83 is electrically connected to the battery case 82 and transmits an open signal when the battery case 82 is revealed (or opened). As shown in Figure 2, in this embodiment, the battery case 82 is capable of accommodating two swappable batteries 1.

Specifically speaking, to open the battery case 82, the user has to turn off the engine of the electric cycle 8 first. Then, the user operates the electric cycle 8 by pushing a bottom (not shown) of the electric cycle 8 so that a case cover (not shown) of the battery case 82 is flipped up to reveal the battery case 82 as shown in Figure 2. A detecting device, which may include a motor and a positioning sensor, is disposed on the battery case 82 and is electrically connected to the case controlling unit 83. Upon detecting that the case cover is flipped up, the detecting device triggers the case controlling unit 83 to transmit the open signal.

The swappable battery 1 includes a housing body 10, an indicator 11 disposed on the housing body 10, an energy storage 12, a detector 13, a communication unit 14, a controller 15, and a connector 16 electrically connected to the detector 13 and the communication unit 14.

In this embodiment, the indicator 11 is an LED light source, but implementation of the indicator 11 is not limited to the disclosure herein and may vary in other embodiments.

The communication unit 14 is communicable with the case controlling unit 83 of the electric cycle 8 via the connector 16 which may be connected directly to the connector 16 when the swappable battery 1 is received in the battery case 82. The communication unit 14 is configured to receive the open signal transmitted by the case controlling unit 83.

The detector 13 is electrically connected to the energy storage 12. The detector 13 is configured to, after the open signal is received by the communication unit 14, detect at least one physical parameter related to the energy storage 12 so as to generate capacity information. In this embodiment, said at least one physical parameter is implemented to be voltage, electric current and/or temperature of the energy storage 12, and the detector 13 may be implemented to be a voltmeter, an ammeter, a thermometer, or a combination thereof, but implementations of said at least one physical parameter and the detector 13 are not limited to the disclosure herein and may vary in other embodiments.

The controller 15 is electrically connected to the indicator 11, the detector 13 and the communication unit 14. The detector 13 is configured to determine a current capacity of the energy storage 12 based on the capacity information, and to control the indicator 11 to output indication corresponding to the current capacity.

When it is determined by the controller 15 that the current capacity is smaller than a predetermined threshold capacity, the controller 15 is configured to control the indicator 11 to emit constant light for a preset duration. When it is determined by the controller 15 that the current capacity is not smaller than the predetermined threshold capacity, the controller 15 is configured to control the indicator 11 to refrain from emitting light. In this embodiment, the predetermined threshold capacity may be 67 % of the full charge capacity, and the preset duration may be 7 seconds. As such, when it is determined that the current capacity ranges between 0 and 66% of the full charge capacity, the indicator 11 is controlled to emit constant light for 7 seconds for notifying the user to charge the swappable battery 1 . When it is determined that the current capacity ranges between 67 and 100% of the full charge capacity, the indicator 11 is controlled to refrain from emitting light so the user can know that the swappable battery 1 is not currently in need of being charged. In one embodiment, the indicator 11 is controlled to emit red light for 7 seconds when it is determined that the current capacity of the energy storage 12 ranges from 0% to 33% of the full charge capacity, and to emit orange light for 7 seconds when it is determined that the current capacity of the energy storage 12 ranges from 34% to 66% of the full charge capacity.

Consequently, when the battery case 82 is opened with the case cover flipped up as shown in Figure 2, the user is capable of recognizing which one of the two swappable batteries 1 needs to be charged based on the visual indication outputted by the indicator 11.

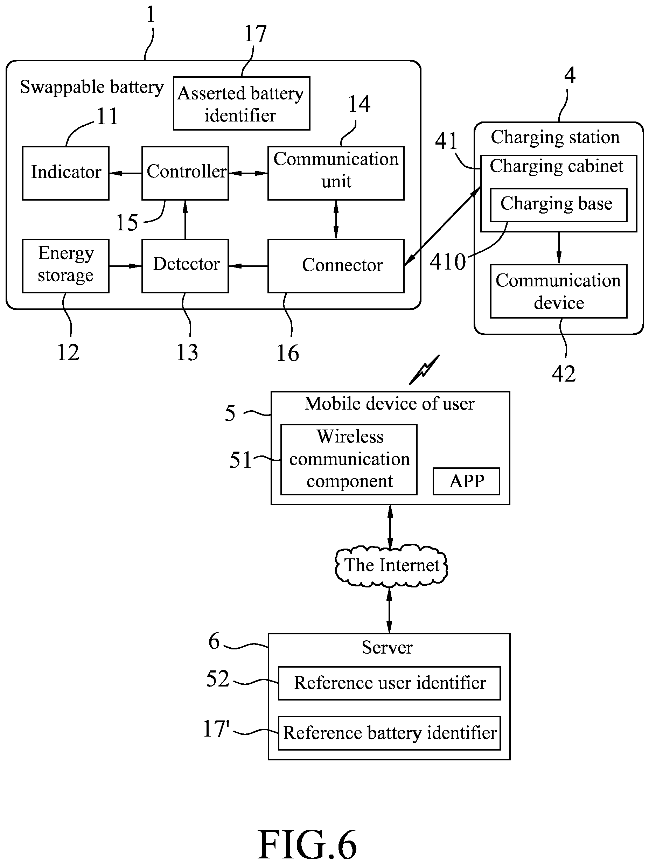

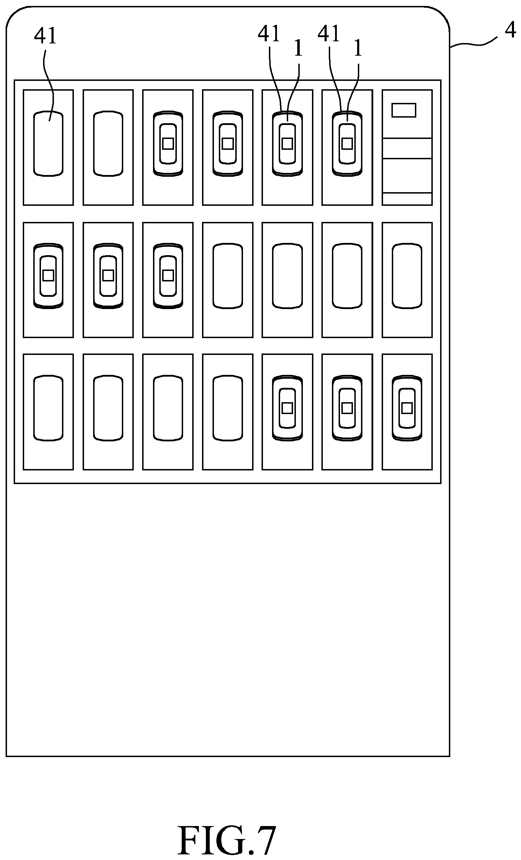

Referring to Figures 2, 6 and 7, a fourth embodiment of the swappable battery 1 according to the disclosure is illustrated.

The swappable battery 1 is adapted to be used on an electric cycle 8, and is to be charged by a charging base 410 of one of a plurality of charging cabinets 41 of a charging station 4. When the swappable battery 1 is connected to the charging base 410 of the one of the charging cabinets 41 for being charged, the charging base 410 transmits a power signal to the swappable battery 1.

The swappable battery 1 includes an indicator 11, an energy storage 12, a detector 13 electrically connected to the energy storage 12, a communication unit 14, a controller 15 electrically connected to the indicator 11, the detector 13 and the communication unit 14, and a connector 16 electrically connected to the detector 13 and the communication unit 14.

The charging station 4 further includes a communication device 42. The communication unit 14 of the swappable battery 1 is communicable with the charging base 410 of the one of the charging cabinets 41 of the charging station 4 via the connector 16 connecting the swappable battery 1 to the charging base 410, and is configured to receive the power signal transmitted by the charging base 410 when the swappable battery 1 is connected to the charging base 410.

In this embodiment, the communication unit 14 may be implemented to be a wired communication device (e.g., a transceiver utilizing a wire-based communication technology), but implementation of the communication unit 14 is not limited to the disclosure herein and may be a wireless communication device (e.g., a WiFi module, a Bluetooth device, or a device having wireless communication capability) that is capable of wireless communication with the charging base 410 in other embodiments.

In this embodiment, the communication device 42 may be implemented to be a wireless communication device (e.g., a WiFi module, a Bluetooth device, an NFC transceiver, or a device having wireless communication capability), but implementation of the communication device 42 is not limited to the disclosure herein and may vary in other embodiments.

In this embodiment, the indicator 11 is an LED light source, but implementation of the indicator 11 is not limited to the disclosure herein and may vary in other embodiments.

The detector 13 is configured to detect at least one physical parameter related to the energy storage 12 so as to generate capacity information . In this embodiment, said at least one physical parameter is implemented to be voltage, electric current and/or temperature of the energy storage 12, and the detector 13 maybe implemented to be a voltmeter, an ammeter, a thermometer, or a combination thereof, but implementations of said at least one physical parameter and the detector 13 are not limited to the disclosure herein and may vary in other embodiments.

The controller 15 is configured to receive the power signal transmitted by the charging base 410. The controller 15 is further configured to, in response to receipt of the power signal, control the detector 13 to generate the capacity information, and determine a current capacity of the energy storage 12 based on the capacity information. Then, the controller 15 controls the indicator 11 to output indication corresponding to the current capacity for a predetermined duration and to refrain from outputting indication after the predetermined duration has elapsed. In this embodiment, the controller 15 is configured to control, based on the current capacity, the indicator 11 to emit constant light for the predetermined duration and to refrain from emitting light after the predetermined duration has elapsed. In this embodiment, the predetermined duration is 10 seconds.

In this embodiment, the controller 15 is configured to control the indicator 11 to emit light in different ways corresponding to respective ranges of the current capacity of the energy storage 12. For example, the indicator 11 is controlled to continuously emit red light for 10 seconds when it is determined that the current capacity of the energy storage 12 ranges from 0% to 33% of the full charge capacity, to continuously emit orange light for 10 seconds when it is determined that the current capacity of the energy storage 12 ranges from 34% to 66% of the full charge capacity, and to continuously emit green light for 10 seconds when it is determined that the current capacity of the energy storage 12 ranges from 67% to 100% of the full charge capacity. In this way, based on the visual indication outputted by the indicator 11, a user is able to ensure that his/her swappable battery 1 is appropriately placed in one of the charging cabinets 41, and is able to recognize the current capacity of the energy storage 12 of the swappable battery 1 being charged.

Additionally, a mobile device 5 of the user who owns the swappable battery 1 includes a wireless communication component 51 that is communicable with the communication device 42 of the charging station 4 and a server 6. The server 6 stores in advanced a reference user identifier 52 and a reference battery identifier 17' . The mobile device 5 of the user that is executing an application program (APP) may be operated by the user to download the reference battery identifier 17' and the reference user identifier 52 from the server 6, and the reference battery identifier 17' and the reference user identifier 52 may be relayed to the charging station 4 in a subsequent authentication procedure. In this embodiment, the wireless communication component 51 may be implemented to be a WiFi module, a Bluetooth device, an NFC transceiver, or a wireless communication transceiver, but implementation of the wireless communication component 51 is not limited to the disclosure herein and may vary in other embodiments.

The swappable battery 1 is configured to store an asserted battery identifier 17 and an asserted user identifier. The swappable battery 1 is configured to provide, when the swappable battery 1 is connected to the charging base 410 of said one of the charging cabinets 41 of the charging station 4, the asserted battery identifier 17 and the asserted user identifier to the charging station 4, so as to enable the charging station 4 to perform the authentication procedure. Specifically, when a distance between the communication device 42 of the charging station 4 and the communication component 51 of the mobile device 5 of the user is smaller than a predetermined distance, the communication component 51 of the mobile device 5 is wirelessly connected with the communication device 42 of the charging station 4 (e.g., via Bluetooth communication), and the mobile device 5 automatically transmits the reference battery identifier 17' and the reference user identifier 52 to the charging station 4. After receiving the reference battery identifier 17' and the reference user identifier 52, the charging station 4 makes a determination as to whether a combination of the asserted battery identifier 17 and the asserted user identifier obtained from the swappable battery 1 matches a combination of the reference battery identifier 17' and the reference user identifier 52 obtained from the mobile device 5 of the user. The charging station 4 is configured to transmit, when the determination thus made is affirmative, a pick-up notification signal to the communication unit 14 of the swappable battery 1. The controller 15 of the swappable battery 1 is configured to control, based on the pick-up notification signal, the indicator 11 to emit flashing light. In this embodiment, the predetermined distance ranges from 0 to 20 meters. In this way, the user who is going to pick up his/her swappable batteries 1 can easily recognize his/her exact swappable battery 1 from among the swappable batteries in the charging station 4 based on the visual indication outputted by the indicator 11.

To sum up, the first embodiment of the swappable battery 1 according to the disclosure utilizes the detector 13 to detect at least one physical parameter related to the energy storage 12 (e.g., voltage, electric current or temperature) so as to generate capacity information, and utilizes the controller 15 to determine a current capacity of the energy storage 12 based on the capacity information, and to control the indicator 11 (e.g., an LED light source) to output indication corresponding to the current capacity. Therefore, a user of the swappable battery 1 is able to instantly know the current capacity of the energy storage 12 of the swappable battery 1 based on the indication outputted by the indicator 11 when the swappable battery 1 is being charged by the charger 9 at home.

The second embodiment of the swappable battery 1 according to the disclosure is similar to the first embodiment. A dealer is able to instantly know a current capacity of the energy storage 12 based on indication outputted by the indicator 11 when the swappable battery 1 of a user is being charged by the charger 9 of the dealer. For example, the indicator 11 is controlled to continuously emit green light when it is determined that the energy storage 12 has been charged up. In addition, the swappable battery 1 further utilizes the communication unit 14 to communicate with the server 6. When it is determined by the server 6 that a distance between the charging base 91 of the charger 9 of the dealer and the mobile device 5 of the user is smaller than a predetermined distance, the server 6 transmits a pick-up notification signal to the charging base 91 of the charger 9 which relays the pick-up notification signal to the swappable battery 1. Based on the pick-up notification signal, the controller 15 of the swappable battery 1 controls the indicator 11 to emit flashing light so as to notify the dealer that the user who owns the swappable battery 1 is coming to pick up the swappable battery 1.

The third embodiment of the swappable battery 1 according to the disclosure is similar to the second embodiment, but further utilizes the communication unit 14 to receive the open signal transmitted by the case controlling unit 83 of the electric cycle 8 when the battery case 82 that accommodates the swappable battery 1 is opened. In response to receipt of the open signal, the detector 13 detects at least one physical parameter related to the energy storage 12 (e.g., voltage, electric current or temperature) so as to generate capacity information. Then, the controller 15 determines a current capacity of the energy storage 12 based on the capacity information, and controls the indicator 11 (e.g., an LED light source) to output indication corresponding to the current capacity. Therefore, if the battery case 82 accommodates multiple swappable batteries 1, when the battery case 82 is opened, a user of the swappable batteries 1 is able to know, based on the indication outputted by the indicators 11, which of the swappable batteries 1 needs to be charged.

The fourth embodiment of the swappable battery 1 according to the disclosure is similar to the second embodiment. The user may know a current capacity of the energy storage 12 by observing indication outputted by the indicator 11 when the swappable battery 1 is being charged by the charging base 410 of one of the charging cabinets 41 of the charging station 4. Moreover, when a distance between the communication device 42 of the charging station 4 and the communication component 51 of the mobile device 5 of the user is smaller than a predetermined distance, the server 6 performs the authentication procedure, and transmits a pick-up notification signal to the swappable battery 1 accordingly. After that, the controller 15 of the swappable battery 1 controls the indicator 11 to emit flashing light based on the pick-up notification signal. Notified by the flashing light, the user is able to know the exact swappable battery 1 to pick up from among the swappable batteries 1 being charged by the charging station 4.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A swappable battery (1) having a function of light indication, adapted to be used on an electric cycle (8), and to be charged by a charger (9) that includes a charging base (91), the charging base (91) transmitting a power signal to said swappable battery (1) when said swappable battery (1) is connected to the charger (9) for being charged, said swappable battery (1) **characterized by**:
an indicator (11);
an energy storage (12);
a detector (13) electrically connected to said energy storage (12), to be electrically connected to the charging base (91) of the charger (9) for receiving the power signal transmitted by the charging base (91), and to detect, in response to receipt of the power signal, at least one physical parameter related to said energy storage (12) so as to generate capacity information; and
a controller (15) electrically connected to said indicator (11) and said detector (13), and configured to determine a current capacity of said energy storage (12) based on the capacity information, and to control said indicator (11) to output indication corresponding to the current capacity.

2. The swappable battery (1) as claimed in claim 1, **characterized in that** said indicator (11) is a light-emitting diode (LED) light source.

3. The swappable battery (1) as claimed in any one of claims 1 and 2, **characterized in that** said controller (15) is configured to control said indicator (11) to emit flashing light when it is determined that said energy storage (12) has not been charged up, and to control said indicator (11) to generate a continuous light output when it is determined that said energy storage (12) has been charged up.

4. The swappable battery (1) as claimed in claim 3, a server (6) storing in advanced a reference charging-base identifier (911') and a piece of location information (71) that corresponds to the reference charging-base identifier (911'), the charging base (91) including a communication module (912) and storing an asserted charging-base identifier (911) of said charging base (91), said swappable battery (1) further **characterized by**:
a communication unit (14) electrically connected to said controller (15), and communicable with the charging base (91) of the charger (9); and in that:
said swappable battery (1) is configured to store an asserted battery identifier (17) that is associated with a mobile device (5) of a user who owns said swappable battery (1);
said communication unit (14) is configured to, when said swappable battery (1) is connected to the charger (9) for being charged, transmit the current capacity determined by said controller (15) and the asserted battery identifier (17) to the charging base (91) so as to enable the charging base (91) to transmit, via the communication module (912), the asserted charging-base identifier (911), the current capacity and the asserted battery identifier (17) to the server (6), so that the server (6) is triggered to
determine the mobile device (5) that is associated with the asserted battery identifier (17) based on the asserted battery identifier (17) thus received,
determine the piece of location information (71) corresponding to the reference charging-base identifier (911') that matches the asserted charging-base identifier (911) thus received,
continuously determine whether a distance between the charging base (91) and the mobile device (5) of the user who owns said swappable battery (1) is smaller than a predetermined distance based on the piece of location information (71) and a piece of positioning information representing a real-time position of the mobile device (5) and obtained from the mobile device (5), and
transmit, when it is determined that the distance between the charging base (91) and the mobile device (5) is smaller than the predetermined distance, a pick-up notification signal to the charging base (91) of the charger (9) which relays the pick-up notification signal to said communication unit (14) of said swappable battery (1) ; and
said controller (15) of said swappable battery (1) is configured to, based on the pick-up notification signal received by said communication unit (14), control said indicator (11) to output visual indication so as to indicate that the user who owns said swappable battery (1) is coming to pick up said swappable battery (1).

5. A swappable battery (1) having a function of light indication, adapted to be used on an electric cycle (8), the electric cycle (8) including a battery case (82) for accommodating said swappable battery (1) and a case controlling unit (83) that is electrically connected to the battery case (82) and that transmits an open signal when the battery case (82) is opened, said swappable battery (1) **characterized by**:
an indicator (11);
an energy storage (12);
a communication unit (14) communicable with the case controlling unit (83) of the electric cycle (8), and configured to receive the open signal transmitted by the case controlling unit (83);
a detector (13) electrically connected to said energy storage (12), and configured to detect at least one physical parameter related to said energy storage (12) so as to generate capacity information; and
a controller (15) electrically connected to said indicator (11), said detector (13) and said communication unit (14), and configured to determine a current capacity of said energy storage (12) based on the capacity information, and to control said indicator (11) to output indication corresponding to the current capacity.

6. The swappable battery (1) as claimed in claim 5, **characterized in that** said indicator (11) is a light-emitting diode (LED) light source.

7. The swappable battery (1) as claimed in any one of claims 5 and 6, **characterized in that** said controller (15) is configured to,
when it is determined by said controller (15) that the current capacity is smaller than a predetermined threshold capacity, control said indicator (11) to emit constant light for a preset duration, and
when it is determined by said controller (15) that the current capacity is not smaller than the predetermined threshold capacity, control said indicator (11) to refrain from emitting light.

8. A swappable battery (1) having a function of light indication, adapted to be used on an electric cycle (8), and to be charged by a charging base (410) of one of a plurality of charging cabinets (41) of a charging station (4), the charging base (410) transmitting a power signal to said swappable battery (1) when said swappable battery (1) is connected to the charging base (410) for being charged, said swappable battery (1) **characterized by**:
an indicator (11);
an energy storage (12);
a communication unit (14) communicable with the charging station (4), and configured to receive the power signal transmitted by the charging base (410);
a detector (13) electrically connected to said energy storage (12), and configured to detect at least one physical parameter related to said energy storage (12) so as to generate capacity information; and
a controller (15) electrically connected to said indicator (11), said detector (13) and said communication unit (14), and configured to receive the power signal transmitted by the charging base (410), to control said detector (13) to generate the capacity information, to determine a current capacity of said energy storage (12) based on the capacity information, and to control said indicator (11) to output indication corresponding to the current capacity for a predetermined duration and to refrain from outputting indication after the predetermined duration has elapsed.

9. The swappable battery (1) as claimed in claim 8, **characterized in that** said indicator (11) is a light-emitting diode (LED) light source.

10. The swappable battery (1) as claimed in any one of claims 8 and 9, the charging station (4) further including a communication device (42), a server (6) storing in advanced a reference user identifier (52) and a reference battery identifier (17'), a mobile device (5) of a user who owns said swappable battery (1) including a wireless communication component (51) that is communicable with the communication device (42) of the charging station (4), the mobile device (5) of the user obtaining the reference battery identifier (17') and the reference user identifier (52) from the server (6) and relaying the reference battery identifier (17') and the reference user identifier (52) to the charging station (4), said swappable battery (1) further **characterized in that** said swappable battery (1) is configured to:
store an asserted battery identifier (17) and an asserted user identifier;
provide, when said swappable battery (1) is connected to the charging base (410) of said one of the charging cabinets (41) of the charging station, the asserted battery identifier (17) and the asserted user identifier to the charging station (4), so as to enable the charging station (4) to make, when a distance between the charging station (4) and the mobile device (5) of the user is smaller than a predetermined distance, a determination as to whether a combination of the asserted battery identifier (17) and the asserted user identifier obtained from said swappable battery (1) matches a combination of the reference battery identifier (17') and the reference user identifier (52) obtained from the mobile device (5) of the user, the charging station (4) transmitting, when the determination thus made is affirmative, a pick-up notification signal to said swappable battery (1); and
control, based on the pick-up notification signal, said indicator (11) to emit flashing light.

11. The battery (1) as claimed in any one of claims 8 to 10, **characterized in that** said controller (15) is configured to control, based on the current capacity, said indicator (11) to emit constant light for the predetermined duration and to refrain from emitting light after the predetermined duration has elapsed.
